# EUROPÄISCHE PATENTSCHRIFT

(11) **EP 3 625 465 B1**
(45) Veröffentlichungstag und Bekanntmachung des Hinweises auf die Patenterteilung: **01.09.2021**
(21) Anmeldenummer: 18725494.1
(22) Anmeldetag: 16.05.2018
(51) Int. Cl.: F16B 25/00

(54) **HOLZSCHRAUBE AUS METALL FÜR DEN KONSTRUKTIVEN HOLZBAU**
WOOD SCREW MADE OF METAL FOR TIMBER CONSTRUCTION
VIS À BOIS EN MÉTAL POUR CONSTRUCTION BOIS

(30) Priorität: 17.05.2017 DE 102017208284
(43) Veröffentlichungstag der Anmeldung: 25.03.2020
(73) Patentinhaber: Schmid Schrauben Hainfeld GmbH, 3170 Hainfeld (AT)
(72) Erfinder: SCHEIBENREITER, Johann, 3170 Hainfeld (AT); REISCHER, Erwin, 3170 Hainfeld (AT); LEB, Gerhard, 3204 Kirchberg (AT)
(74) Vertreter: Patentanwälte Ruff, Wilhelm, Beier, Dauster & Partner mbB
(86) Internationale Anmeldenummer: PCT/EP2018/062809
(87) Internationale Veröffentlichungsnummer: WO 2018/210967

(56) Entgegenhaltungen:
- CN-U- 202 182 094
- US-A- 2 959 086

## Beschreibung

Die Erfindung betrifft eine Holzschraube aus Metall für den konstruktiven Holzbau mit einem Schraubenkopf mit einer Antriebsausbildung, einem Schraubenschaft mit einer Schraubenspitze, wobei der Schraubenschaft anschließend an den Schraubenkopf mit einem gewindefreien Abschnitt und anschließend an die Schraubenspitze mit einem Gewinde versehen ist, wobei der Schraubenschaft ausgebildet ist, in einem Holzbauteil ohne Vorbohren ein Gewinde zu formen.

Die CN 202 182 094 U offenbart eine Holzschraube mit einem Schraubenkopf, einem glatten Schaftabschnitt, einem gerändelten Abschnitt und einem Gewindeabschnitt. Der gerändelte Abschnitt umfasst Rippen, die als Schneidkanten wirken und eine Bohrung während des Einschraubvorgangs aufreiben.

Die US 2 959 086 A offenbart eine Holzschraube mit einem Schraubenkopf, einem teilweise glatten Schaftabschnitt und einem Gewindeabschnitt. Der teilweise glatte Schaftabschnitt weist eine Zacke auf, um während des Einschraubvorgangs eine Bohrung für den teilweise glatten Schaftabschnitt zu vergrößern.

Mit der Erfindung soll eine verbesserte Holzschraube für den konstruktiven Holzbau angegeben werden, die speziell für sehr hartes Holz geeignet ist und die auch ohne Vorbohren die Spaltwirkung sowie die Rissbildung an der Oberfläche beim Eindrehen des Schraubenkopfs verringern kann.

Das der Erfindung zugrunde liegende Problem wird durch eine Holzschraube mit den Merkmalen von Anspruch 1 gelöst. Vorteilhafte Weiterbildungen der Erfindung sind in den Unteransprüchen angegeben.

Erfindungsgemäß ist eine Holzschraube aus Metall für den konstruktiven Holzbau mit einem Schraubenkopf mit einer Antriebsausbildung und einem Schraubenschaft mit einer Schraubenspitze vorgesehen, wobei der Schraubenschaft anschließend an den Schraubenkopf mit einem gewindefreien Abschnitt und anschließend an die Schraubenspitze mit einem Gewinde versehen ist, wobei der Schraubenschaft ausgebildet ist, in einem Holzbauteil ohne Vorbohren ein Gewinde zu formen, bei der zwischen dem mit dem Gewinde versehenen Abschnitt des Schraubenschafts und dem gewindefreien Abschnitt des Schraubenschafts ein Aufweitabschnitt vorgesehen ist, wobei der Aufweitabschnitt mehrere Rippen aufweist, die in radialer Richtung über den Außendurchmesser des gewindefreien Abschnitts hinausragen und wobei die Rippen in ihrem radial außenliegenden Bereich abgerundet ausgebildet sind.

Der Aufweitbereich erweitert und verdichtet das von dem Schraubenschaft mit dem mit dem Gewinde versehenen Abschnitt hergestellte Loch und sorgt damit für ein verringertes Einschraubmoment aber auch für eine verringerte Spaltwirkung der Schraube und auch für eine verringerte Rissbildung beim Versenken des Schraubenkopfs. Der Aufweitabschnitt ist mit den Rippen ähnlich einem sogenannten Schaftfräser ausgebildet, allerdings soll mit den Rippen keine Fräswirkung erzielt werden, sondern eine Verdrängungswirkung. Aus diesem Grund sind die Rippen in ihrem radial außenliegenden Bereich abgerundet ausgebildet. Die Rippen sind aufgrund ihrer abgerundeten Ausbildung somit nicht in der Lage, die Holzfasern zu zerschneiden, wie dies bei einem Schaftfräser der Fall wäre. Vielmehr sollen die Holzfasern verdrängt und verdichtet werden, was auch zu einer Verfestigung des Holzes in diesem Bereich, der das durch die Schraube gebildete Loch umgibt, führt. Die Rippen verdrängen das Holz und schieben es beiseite und führen durch das verursachte Aufweiten des Lochs auch zu einer Verfestigung des Holzes. Die abgerundeten Rippen können nicht symmetrisch und/oder ungleichmäßig über den Umfang verteilt angeordnet sein. Durch die Rippen wird der Eindrehwiderstand der Schraube verringert und das Einschrauben mit reduziertem Einschraubdrehmoment ohne Vorbohren wird ermöglicht. Mit der erfindungsgemäßen Schraube kann die erforderliche Sicherheit von 1, 5 eingehalten werden, entsprechend dem Verhältnis des Bruchdrehmomentes der Schraube zum Einschraubdrehmoment. Dadurch wird die nutzbare Schraubenlänge deutlich erhöht, da eben der Eindrehwiderstand durch die abgerundeten Rippen verringert ist. Die nutzbare Einschraublänge kann bei der erfindungsgemäßen Schraube gegenüber konventionellen Schrauben um den Faktor 3 erhöht werden. Durch die Verdichtung und Verfestigung des beiseite geschobenen Holzes wird der Ausziehwert des Gewindes deutlich erhöht. Weiter reduzieren die Rippen die Spaltwirkung und das Aufreißen des Holzes. Dadurch können mit der erfindungsgemäßen Schraube gegenüber konventionellen Schrauben kleinere Schraubenabstände sowie auch kleinere Randabstände und Hirnholzabstände realisiert werden. Durch das Zusammenwirken des Einschraubens ohne Vorbohren und die Wirkung der abgerundeten Rippen wird bereits bei vergleichsweise kurzer Gewindelänge die volle Gewinde-Ausziehtragfähigkeit realisiert. Beispielsweise kann bei Schrauben mit einem Durchmesser von 8 mm bereits ab 80 mm Gewindelänge die volle Gewinde-Ausziehtragfähigkeit realisiert sein.

In Weiterbildung der Erfindung sind die Rippen im Querschnitt wellenförmig ausgebildet.

Mit einer solchen wellenförmigen Ausgestaltung lässt sich sowohl eine Aufweitung der durch die Schraube hergestellten Bohrung als auch eine Verdichtung der Holzfasern erzielen.

In Weiterbildung der Erfindung ist ein Krümmungsradius der Rippen annähernd konstant.

Erfindungsgemäß ist ein Krümmungsradius der Rippen größer als eine in radialer Richtung gemessene Höhe der Rippen.

Die Rippen weisen somit nicht lediglich abgerundete Kanten auf, sondern die gesamte Rippe ist im Querschnitt durchgehend gekrümmt. Dadurch kann eine Schneidwirkung der Rippen völlig vermieden werden.

In Weiterbildung der Erfindung sind die Rippen gleichmäßig über den Umfang des Schraubenschafts verteilt.

In Weiterbildung der Erfindung sind die Rippen ungleichmäßig über den Umfang des Schraubenschafts verteilt.

Auf diese Weise kann der Eindrehwiderstand der erfindungsgemäßen Schraube reduziert werden. Bspw. sind in Umfangsrichtung gesehen die erste und die zweite Rippe um 58° voneinander beabstandet, die zweite Rippe und die dritte Rippe sind dann um 62° voneinander beabstandet, die dritte Rippe und die vierte Rippe sind um 60° voneinander beabstandet, die vierte Rippe und die fünfte Rippe sind um 58° voneinander beabstandet, die fünfte Rippe und die sechste Rippe sind um 62° voneinander beabstandet und die sechste Rippe und die erste Rippe sind um 60° beabstandet. Auf diese Weise wird eine ungleichmäßige Verteilung der Rippen über den Umfang erzielt.

In Weiterbildung der Erfindung sind zwischen sechs und zwölf Rippen vorgesehen.

In Weiterbildung der Erfindung sind die Rippen parallel zur Mittellängsachse der Schraube angeordnet.

Auf diese Weise wird bewusst keine Schraubwirkung der Rippen, sondern lediglich eine Aufweitwirkung und Verdichtungswirkung erzielt.

In Weiterbildung der Erfindung liegt eine Länge des Aufweitabschnitts in Richtung der Mittellängsachse gemessen zwischen dem 1,5-Fachen und dem 4-Fachen der Gewindesteigung.

Eine solche Länge des Aufweitabschnitts hat sich als sehr vorteilhaft bezüglich einer verringerten Spaltwirkung der Schraube sowie auch bezüglich eines verringerten Einschraubmoments der Schraube erwiesen.

In Weiterbildung der Erfindung beträgt in dem mit dem Gewinde versehenen Abschnitt des Schraubenschafts ein Kerndurchmesser des Schraubenschafts mindestens 70 % des Außendurchmessers.

Beispielsweise beträgt bei einem Kerndurchmesser des Gewindes von 6,1 mm der Außendurchmesser 8,2 mm. Der Kerndurchmesser ist gegenüber einer konventionellen Holzschraube somit deutlich größer. Dadurch werden die Zugtragfähigkeit und das Bruchdrehmoment, also die Sicherheit gegen Abdrehen der Schraube, deutlich erhöht. Auch kann die erfindungsgemäße Holzschraube dadurch bei einer Scherbelastung höher belastet werden. Die erfindungsgemäße Holzschraube ist speziell auf Harthölzer sowie Holzwerkstoffe aus Hartholz abgestimmt. Ein Kerndurchmesser des Schraubenschafts von mindestens 70 % des Außendurchmessers führt daher auch zu einer sicheren Verankerung des Gewindes in dem Hartholzwerkstoff. Durch das gegenüber konventionellen Schrauben größere Verhältnis von Kerndurchmesser zu Außendurchmesser wird die Zugtragfähigkeit der Schraube um über 30 % erhöht. Das Fließmoment oder Biegemoment und das Bruchdrehmoment der Schraube sind ebenfalls deutlich erhöht.

In Weiterbildung der Erfindung sind in dem Aufweitabschnitt die Rippen an ihrem, der Schraubenspitze zugewandten Ende abgeschrägt.

Auf diese Weise kann für eine allmähliche Verdichtung und Aufweitung beim Eindrehen der Schraube im Bereich des Aufweitabschnitts gesorgt werden.

In Weiterbildung der Erfindung sind in dem Aufweitabschnitt die Rippen an ihrem, dem Schraubenkopf zugewandten Ende abgeschrägt.

Auf diese Weise wird eine Schneidwirkung der Rippen des Aufweitabschnitts vermieden.

In Weiterbildung der Erfindung ist unmittelbar anschließend an die Schraubenspitze ein Abschnitt mit Gewinde und mit parallel zur Mittellängsachse des Schraubenschafts angeordneten Verdichtungsrippen vorgesehen.

Ein solcher Abschnitt wird auch als Kernverdichter bezeichnet und kann die Spaltwirkung der Schraube deutlich verringern.

In Weiterbildung der Erfindung erstrecken sich die Verdichtungsrippen über den Kerndurchmesser des Gewindes hinaus, weisen aber eine kleinere radiale Erstreckung als die Gewindeflanken des Gewindes auf.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. Einzelmerkmalen der Ausführungsform, die in den Zeichnungen gezeigt sind oder in Absätzen der Beschreibung beschrieben sind, können dabei in beliebiger Weise auch ohne die weiteren Merkmale, mit denen sie im Zusammenhang beschrieben sind, kombiniert werden, ohne den Rahmen der Erfindung zu überschreiten. In den Zeichnungen zeigen:
- Fig. 1: eine Ansicht einer erfindungsgemäßen Holzschraube von schräg oben,
- Fig. 2: eine abschnittsweise Seitenansicht der Holzschraube der Fig. 1,
- Fig. 3: eine Draufsicht auf die Holzschraube der Fig. 1,
- Fig. 4: eine abschnittsweise Ansicht auf die Schnittebenen B-B in Fig. 3,
- Fig. 5: eine Ansicht auf die Schnittebene C-C in Fig. 2.
- Fig. 6: eine abschnittsweise Seitenansicht einer erfindungsgemäßen Holzschraube gemäß einer weiteren Ausführungsform und
- Fig. 7: eine Schnittansicht auf die Schnittebene A-A in Figur 6

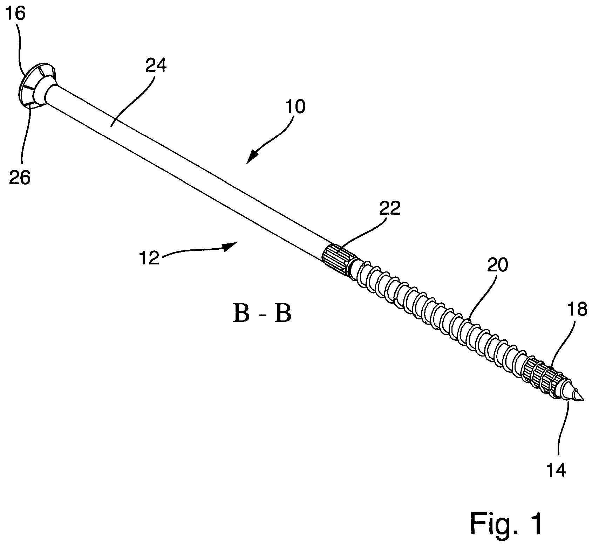

Fig. 1 zeigt eine erfindungsgemäße Holzschraube 10, die einen Schraubenschaft 12 mit einer Schraubenspitze 14 und einen Schraubenkopf 16 aufweist. Der Schraubenkopf 16 ist an seiner in Fig. 1 nicht sichtbaren Oberseite mit einer Antriebsausbildung versehen. Die Holzschraube 10 ist für den konstruktiven Holzbau und speziell für Hartholzwerkstoffe vorgesehen. Dies können beispielsweise einheimische Harthölzer wie Eiche, Buche, Birke, Ahorn, Esche, Kastanie und Robinie sowie auch Importhölzer, vergleichbar zu der Norm EN 1912, sein. Darüber hinaus ist die Holzschraube 10 in besonderer Weise für Hartholzwerkstoffe, beispielsweise Furnierschichtholz aus Hartholz, OSB, Sperrholz, Brettsperrholz und Brettschichtholz geeignet. Auch für Kombinationen aus Hartholzwerkstoffen und Blechbauteilen ist die Holzschraube 10 sehr gut geeignet. Die erfindungsgemäße Holzschraube 10 ist so ausgebildet, dass sie in einem Holzbauteil aus einem Hartholzwerkstoff ohne Vorbohren ein Gewinde formen kann.

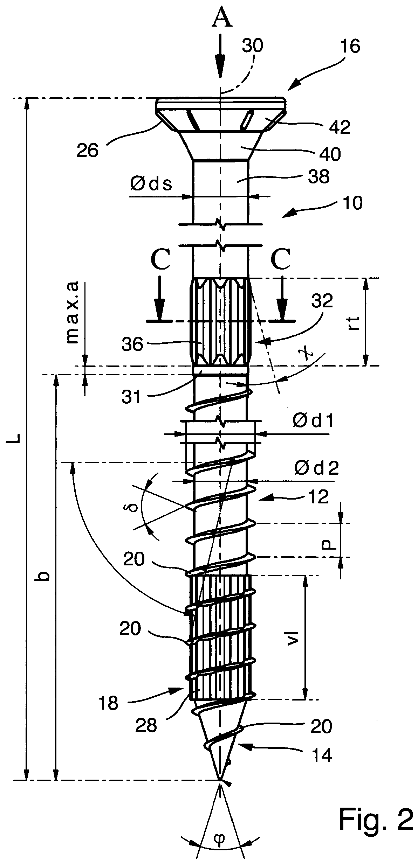

Unmittelbar anschließend an die Schraubenspitze 14, die mit einem Gewinde 20 versehen ist, ist ein sogenannter Kernverdichterabschnitt 18 vorgesehen, der ebenfalls mit dem Gewinde 20 versehen ist und zusätzlich, siehe Fig. 2, in radialer Richtung vorstehende Verdichtungsrippen 18 aufweist. Der Kernverdichterabschnitt 18 ist Teil eines mit dem Gewinde 20 versehenen Abschnitts des Schraubenschafts 12.

Auf das Gewinde 20 folgt in Richtung auf den Schraubenkopf 16 zu ein Aufweitabschnitt 22, in dem, siehe Fig. 2, kein Gewinde mehr vorhanden ist, der aber mit sich in radialer Richtung erstreckenden Rippen versehen ist. Zwischen dem Aufweitabschnitt 22 und dem Schraubenkopf 16 ist ein Abschnitt 24 des Schraubenschafts angeordnet, in dem der Schraubenschaft zylindrisch und mit glatter Außenseite ausgeführt ist. Der Querschnitt im Abschnitt 24 ist kreisrund.

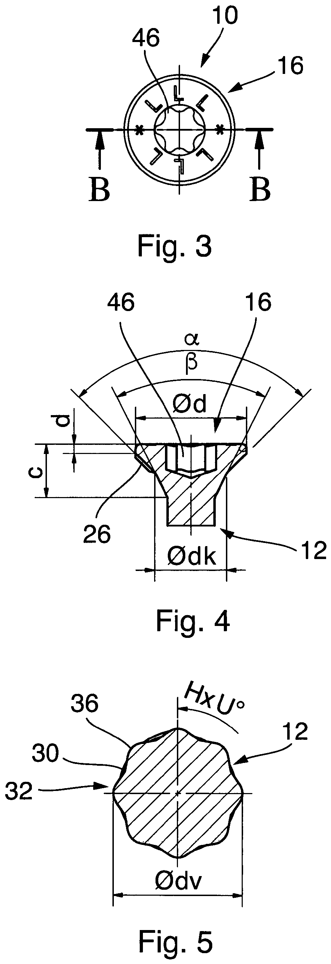

Die Unterseite des Schraubenkopfs ist kegelstumpfförmig mit zwei unterschiedlichen Kegelwinkeln ausgeführt, siehe Fig. 4. An der Unterseite des Schraubenkopfs 16 sind mehrere Fräsrippen 26 vorgesehen, die beim Einsenken des Schraubenkopfs in die Oberfläche des Holzbauteils eine Fräswirkung entfalten können.

Die Darstellung der Fig. 2 zeigt die Schraube 10 der Fig. 1 abschnittsweise und im vergrößerten Maßstab.

Die Schraubenspitze 14 ist kegelförmig und bei der dargestellten Ausführungsform mit einem Kegelwinkel ϕ von 40° ausgeführt. Das Gewinde 20 erstreckt sich bis zum Ende der Schraubenspitze 14. Beim Aufsetzen der Holzschraube 10 auf ein Holzbauteil greift das Gewinde 20 somit unmittelbar nach Beginn einer Rotation der Holzschraube 10 und zieht die Holzschraube 10 in das Holzbauteil hinein. Die kegelförmige Schraubenspitze 14 erweitert dabei die Bohrung und begünstigt ein schnelles Anbeißen der Holzschraube 10.

Im Rahmen der Erfindung kann die Holzschraube 10 aber beispielsweise auch mit einer Bohrspitze ausgeführt werden.

Unmittelbar anschließend an die Schraubenspitze 14 ist der sogenannte Kernverdichterabschnitt 18 angeordnet. Der Kernverdichterabschnitt 18 kann im Rahmen der Erfindung auch weggelassen werden. Im Abschnitt 18 wäre in diesem Fall dann lediglich das Gewinde 20 vorhanden, nicht aber die mehreren, gleichmäßig über den Umfang verteilten Rippen 28, die parallel zu einer Mittellängsachse 30 der Holzschraube 10 angeordnet sind. Die Rippen 28 erstrecken sich über den Kerndurchmesser des Schraubenschafts 12 hinaus, enden aber in radialer Richtung unterhalb der Kanten der Gewindeflanken des Gewindes 20. Auch im Kernverdichterabschnitt 18 sorgt das Gewinde 20 also dafür, dass die Holzschraube 10 in das Holzbauteil hineingezogen wird.

Die Länge vl des Kernverdichterabschnitts 18 beträgt etwa 3,5 bis 4 Gewindesteigungen.

An den Kernverdichterabschnitt 18 schließt sich in Richtung auf den Schraubenkopf 16 zu ein Abschnitt des Schraubenschafts 12 an, in dem lediglich das Gewinde 20 vorhanden ist. Das Gewinde 20 ist bevorzugt als eingängiges Gewinde ausgebildet. Ein Kerndurchmesser d2 des Schraubenschafts 12 in dem mit dem Gewinde 20 versehenen Abschnitt beträgt dabei 70 % oder mehr des Außendurchmessers d1 des Schraubenschafts 12 in dem mit dem Gewinde 20 versehenen Abschnitt. Der Kerndurchmesser d2 ist damit gegenüber konventionellen Holzschrauben deutlich größer. Bei Hartholzwerkstoffen, für die die erfindungsgemäße Holzschraube 10 vorgesehen ist, wird dennoch ein sehr stabiles Eingreifen des Gewindes 20 in das Holzbauteil erzielt und gleichzeitig werden die mechanischen Werte stark positiv beeinflusst. Beispielsweise können die Zugtragfähigkeit der Holzschraube 10, das Bruchdrehmoment, also die Sicherheit gegen Abdrehen, und auch die Ausziehwerte sowie das Fließmoment, entsprechend der Biegespannung, der Holzschraube 10 erhöht werden. Die Holzschraube 10 kann gegenüber konventionellen Holzschrauben auch auf Abscheren in Holz-Holz-Verbindungen, Stahlblech-Holz-Verbindungen oder Holz-Beton-Verbindungen signifikant höher belastet werden.

Gemäß bevorzugter Ausführungsformen der Erfindung hat der mit dem Gewinde 20 versehene Abschnitt des Schraubenschafts 12, also einschließlich des Kernverdichterabschnitts 18 und der Schraubenspitze 14, eine Länge b, die in einem Bereich zwischen 20 mm und 1000 mm liegen kann.

An den Abschnitt des Schraubenschafts 12 mit dem Gewinde 20 schließt sich zunächst ein sehr kurzer zylindrischer Abschnitt 30 mit einer Länge a an, die aber sehr kurz ist und beispielsweise lediglich 1 mm beträgt. Auf diesen zylindrischen Abschnitt 30 folgt dann ein Aufweitabschnitt 32, in dem mehrere sich in radialer Richtung über den Kern des Schraubenschafts 12 hinaus erstreckende Rippen 36 vorgesehen sind. Die Rippen 36 erstrecken sich parallel zur Mittellängsachse 30 der Holzschraube 10. An ihrem, dem Schraubenkopf 16 zugewandten Ende sind die Rippen 36 abgeschrägt, genau wie an ihrem, der Schraubenspitze 14 zugewandten Ende. Der Winkel der Abschrägung beträgt am oberen und unteren Ende etwa 20° und ist als Winkel 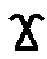 in Fig. 2 eingezeichnet. Die Länge rt des Aufweitabschnitts 32 entspricht etwas mehr als dem Doppelten des Schaftdurchmessers ds. Die Länge rt kann gemäß der Erfindung zwischen dem 1,5-Fachen und dem 4-Fachen der Gewindesteigung p liegen.

Fig. 5 zeigt eine Ansicht auf die Schnittebene C-C in Fig. 2 und damit eine Schnittansicht des Aufweitabschnitts 32. Zu erkennen ist in dieser Schnittansicht, dass die Rippen 36 wellenförmig verlaufen, so dass sich ein wellenartiges Profil über den Umfang des Schraubenschafts 12 erstreckt. Insgesamt sind bei der dargestellten Ausführungsform acht Rippen 36 vorgesehen, wobei gemäß der Erfindung zwischen sechs und zwölf Rippen vorgesehen sein können. Fig. 5 ist auch zu entnehmen, dass die Täler zwischen den einzelnen Rippen 36 nicht ausgerundet sind, sondern sehr flach V-förmig verlaufen.

Die Rippen 36 sind annähernd gleichmäßig gekrümmt und ein Krümmungsradius ist größer als eine radiale Erstreckung der Rippen 36. Der Krümmungsradius, mit dem die Rippen 36 an ihren radial außenliegenden Bereichen gestaltet sind, ist somit vergleichsweise groß. Dadurch kann jede Fräswirkung der Rippen 36 verhindert werden. Vielmehr verdrängen und verdichten die Rippen 36 die Holzfasern an der Innenseite der durch die Holzschraube 10 erzeugten Bohrung. Zwischen zwei gegenüberliegenden Rippen 36 beträgt der Außendurchmesser im Aufweitabschnitt 32 dv. Zwischen zwei Rippen 36 ist in Fig. 5 jeweils ein Abschnitt der Gewindeflanken des Gewindes 20 zu erkennen. Man kann Fig. 5 daher entnehmen, dass der Außenradius dv im Aufweitabschnitt 32 etwas größer ist als der Außendurchmesser d1 des Gewindes 20.

An den Aufweitabschnitt 32 schließt sich in Richtung auf den Schraubenkopf 16 zu ein zylindrischer Abschnitt 38 des Schraubenschafts 12 mit glatten Außenwänden an. Dieser Abschnitt 38 weist einen Außendurchmesser ds auf, wobei ds kleiner ist als dv.

Auf den Abschnitt 38 folgt der Schraubenkopf 16, wobei dessen Unterseite in Form eines Doppelkonus mit unterschiedlichen Kegelwinkeln gestaltet ist. Auf den Abschnitt 38 folgt zunächst ein kegelstumpfförmiger Abschnitt 40 mit einem ersten Kegelwinkel, auf den dann ein zweiter Abschnitt 42 mit etwas größerem Kegelwinkel folgt. In dem Abschnitt 42 mit größerem Kegelwinkel sind mehrere Fräsrippen 26 gleichmäßig über den Umfang verteilt angeordnet. Beim Einsenken des Schraubenkopfs 16 in die Oberfläche eines Holzbauteils fräsen diese Fräsrippen 26 die Holzoberfläche auf, so dass eine Rissbildung beim Versenken des Schraubenkopfs 16 vermieden wird.

Die Darstellung der Fig. 3 zeigt die Holzschraube 10 in einer Ansicht von oben. Zu erkennen ist die Oberseite des Schraubenkopfs 16 mit einer Antriebsausbildung 46, die als Vertiefung ausgeführt ist.

Fig. 4 zeigt eine abschnittsweise Ansicht auf die Schnittebene B-B in Fig. 3. Zu erkennen ist in dieser Ansicht die Ausgestaltung der Unterseite des Schraubenkopfs 16 mit zwei unterschiedlichen Kegelwinkeln und den Fräsrippen 26. Weiter ist die Antriebsausbildung 46 gut zu erkennen.

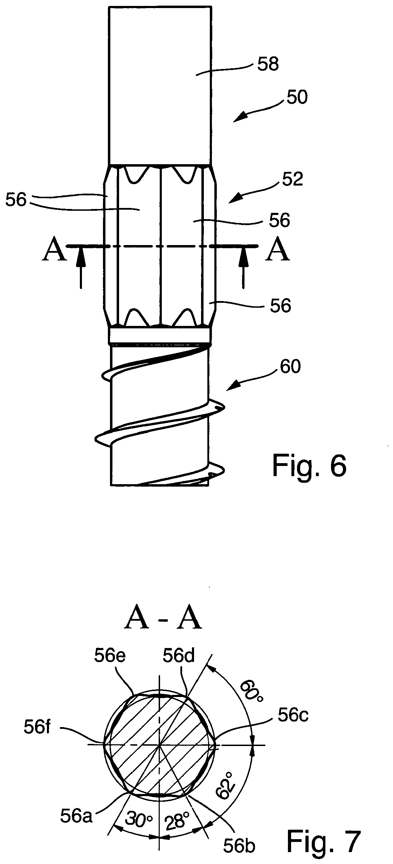

Figur 6 zeigt abschnittsweise eine erfindungsgemäße Holzschraube 50 mit einem Aufweitabschnitt 52, in dem mehrere abgerundete Rippen 56 vorgesehen sind. Jede einzelne dieser Rippen 56 ist gleich ausgebildet wie die Rippen 36 der Holzschraube 10 der Figur 2, in Umfangsrichtung gesehen sind die Rippen 56 aber anders angeordnet. Unterhalb des Aufweitabschnitts 52 ist ein Gewinde 60 und oberhalb des Aufweitabschnitts 52 ist ein zylindrischer Abschnitt 58 mit glatter Außenwand abschnittsweise dargestellt. Figur 6 zeigt die Schraube 50 lediglich abschnittsweise, anhand eines Vergleichs mit der Schraube 10 der Figur 2 ist aber zu erkennen, dass sich an den Abschnitt 58 mit glatter Außenwand eine Aufweitung und letztendlich ein Schraubenkopf anschließen würde. Der Abschnitt mit dem Gewinde 60 würde nach unten fortgesetzt und letztendlich an einer Schraubenspitze enden.

In Figur 7 ist eine Ansicht auf die Schnittebene A-A in Figur 6 dargestellt. Zu erkennen sind insgesamt sechs Rippen 56a, 56b, 56c, 56d, 56e und 56f. Diese Rippen 56a bis 56f sind jeweils abgerundet ausgebildet und, wie sich aus einem Vergleich der Figuren 7 und 5 ergibt, prinzipiell gleich zu den Rippen 36 der Holzschraube 10 ausgebildet. Unterschiedlich ist, wie in Figur 7 zu erkennen ist, der Abstand der Rippen 56a bis 56f in Umfangsrichtung. Die erste Rippe 56a ist von der zweiten Rippe 56b um einen Winkel von 58° beabstandet. Die zweite Rippe 56b ist von der dritten Rippe 56c um einen Winkel von 62° beabstandet. Die dritte Rippe 56c ist von der vierten Rippe 56d um einen Winkel von 60° beabstandet. Die vierte Rippe 56d ist von der fünften Rippe 56e um einen Winkel von 58° beabstandet. Die fünfte Rippe 56e ist von der sechsten Rippe 56f um einen Winkel von 62° beabstandet. Die sechste Rippe 56f ist von der ersten Rippe 56a um einen Winkel von 60° beabstandet. Diese in Umfangsrichtung ungleichmäßige Verteilung der Rippen 56 verringert das Einschraubdrehmoment der erfindungsgemäßen Holzschraube 50. Wesentlich ist, dass zwischen jeweils zwei aufeinanderfolgenden Rippen ein unterschiedlicher Winkelabstand gewählt wird. Die Anordung der Rippen 56a bis 56f ist dadurch auch unsymmetrisch bezogen auf Ebenen, in denen die Mittellängsachse der Schraube liegt.

## Patentansprüche

1. Holzschraube aus Metall für den konstruktiven Holzbau, mit einem Schraubenkopf (16) mit einer Antriebsausbildung (46), einem Schraubenschaft (12) mit einer Schraubenspitze (14), wobei der Schraubenschaft (12) anschließend an den Schraubenkopf (16) mit einem gewindefreien Abschnitt (38) und anschließend an die Schraubenspitze (14) mit einem Gewinde (20) versehen ist, wobei der Schraubenschaft (12) ausgebildet ist, in einem Holzbauteil ohne Vorbohren ein Gegengewinde zu formen, wobei zwischen dem mit dem Gewinde (20) versehenen Abschnitt (38) des Schraubenschafts (12) und dem gewindefreien Abschnitt (38) des Schraubenschafts (12) ein Aufweitabschnitt (32) vorgesehen ist, wobei der Aufweitabschnitt (32) mehrere Rippen (36) aufweist, die in radialer Richtung über den Außendurchmesser des gewindefreien Abschnitts (38) hinausragen, wobei die Rippen (36) in ihrem radial außenliegenden Bereich abgerundet ausgebildet sind, **dadurch gekennzeichnet, dass** ein Krümmungsradius der Rippen (36) größer ist als eine in radialer Richtung gemessene Höhe der Rippen (36).

2. Holzschraube nach Anspruch 1, **dadurch gekennzeichnet, dass** die Rippen (36) im Querschnitt wellenförmig ausgebildet sind.

3. Holzschraube nach Anspruch 1 oder 2, **dadurch gekennzeichnet, dass** ein Krümmungsradius der Rippen (36) annähernd konstant ist.

4. Holzschraube nach wenigstens einem der vorstehenden Ansprüche, **dadurch gekennzeichnet, dass** die Rippen (36) gleichmäßig über den Umfang des Schraubenschafts (12) verteilt sind.

5. Holzschraube nach wenigstens einem der Ansprüche 1 bis 3, **dadurch gekennzeichnet, dass** die Rippen (56) ungleichmäßig über den Umfang des Schraubenschafts verteilt sind.

6. Holzschraube nach wenigstens einem der vorstehenden Ansprüche, **dadurch gekennzeichnet, dass** zwischen 6 und 12 Rippen (36) vorgesehen sind.

7. Holzschraube nach wenigstens einem der vorstehenden Ansprüche, **dadurch gekennzeichnet, dass** die Rippen (36) parallel zur Mittellängsachse (30) der Holzschraube (10) angeordnet sind.

8. Holzschraube nach wenigstens einem der vorstehenden Ansprüche, **dadurch gekennzeichnet dass** eine Länge des Aufweitabschnitts (32) in Richtung der Mittellängsachse (20) gemessen zwischen dem 1,5-fachen und dem 4-fachen der Gewindesteigung des Gewindes (20) liegt.

9. Holzschraube nach wenigstens einem der vorstehenden Ansprüche, **dadurch gekennzeichnet, dass** in dem mit dem Gewinde (20) versehenden Abschnitt (38) des Schraubenschafts (12) ein Kerndurchmesser (d2) des Schraubenschafts (12) mindestens 70% des Außendurchmessers (d1) beträgt.

10. Holzschraube nach wenigstens einem der vorstehenden Ansprüche, **dadurch gekennzeichnet, dass** in dem Aufweitabschnitt (32) die Rippen (36) an ihrem, der Schraubenspitze (14) zugewandten Ende abgeschrägt sind.

11. Holzschraube nach wenigstens einem der vorstehenden Ansprüche, **dadurch gekennzeichnet, dass** in dem Aufweitabschnitt (32) die Rippen (36) an ihrem, dem Schraubenkopf (16) zugewandten Ende abgeschrägt sind.

12. Holzschraube nach wenigstens einem der vorstehenden Ansprüche, **dadurch gekennzeichnet, dass** unmittelbar anschließend an die Schraubenspitze (14) ein Kernverdichterabschnitt (18) mit Gewinde (20) und parallel zur Mittellängsachse des Schraubenschafts (12) angeordneten Verdichtungsrippen (28) vorgesehen ist.

13. Holzschraube nach Anspruch 12, **dadurch gekennzeichnet, dass** sich die Verdichtungsrippen (28) über den Kerndurchmesser des Gewindes (20) hinaus erstrecken aber eine kleinere radiale Erstreckung als die Gewindeflanken des Gewindes (20) aufweisen.

## Claims

1. Wood screw made of metal for timber construction, having a screw head (16) with a drive formation (46), a screw shaft (12) with a screw tip (14), wherein the screw shaft (12) is provided with a non-threaded portion (38) adjacent to the screw head (16) and provided with a thread (20) adjacent to the screw tip (14), wherein the screw shaft (12) is configured for forming a mating thread in a wooden component without pre-drilling, wherein an expanding portion (32) is provided between the portion (38) of the screw shaft (12) having the thread (20) and the non-threaded portion (38) of the screw shaft (12), wherein the expanding portion (32) has a plurality of ribs (36) projecting beyond the outer diameter of the non-threaded portion (38) in the radial direction, wherein the ribs (36) are rounded off in the radial outer region thereof,
**characterized in that**
a radius of curvature of the ribs (36) is greater than a height of the ribs (36) measured in the radial direction.

2. Wood screw according to claim 1, **characterized in that** the ribs (36) have a wave-like shape in cross section.

3. Wood screw according to claim 1 or 2, **characterized in that** a radius of curvature of the ribs (36) is approximately constant.

4. Wood screw according to at least one of the preceding claims, **characterized in that** the ribs (36) are uniformly distributed over the circumference of the screw shaft (12).

5. Wood screw according to at least one of claims 1 to 3, **characterized in that** the ribs (56) are non-uniformly distributed over the circumference of the screw shaft.

6. Wood screw according to at least one of the preceding claims, **characterized in that** between 6 and 12 ribs (36) are provided.

7. Wood screw according to at least one of the preceding claims, **characterized in that** the ribs (36) are arranged in parallel to the central longitudinal axis (30) of the wood screw (10).

8. Wood screw according to at least one of the preceding claims, **characterized in that** a length of the expanding portion (32) measured in the direction of the central longitudinal axis (20) is between 1.5-fold to 4-fold the thread pitch of the thread (20).

9. Wood screw according to at least one of the preceding claims, **characterized in that** in the portion (38) of the screw shaft (12) provided with the thread (20) a core diameter (d2) of the screw shaft (12) is at least 70 % of the outer diameter (d1).

10. Wood screw according to at least one of the preceding claims, **characterized in that** in the expanding portion (32) the ribs (36) are chamfered at the end facing the screw tip (14).

11. Wood screw according to at least one of the preceding claims, **characterized in that** in the expanding portion (32) the ribs (36) are chamfered at the end facing the screw head (16).

12. Wood screw according to at least one of the preceding claims, **characterized in that**, immediately adjacent to the screw tip (14), a core compression portion (18) having a thread (20) and compression ribs (28) arranged in parallel to the central longitudinal axis of the screw shaft (12) is provided.

13. Wood screw according to claim 12, **characterized in that** the compression ribs (28) extend beyond the core diameter of the thread (20), but have a smaller radial extension than the thread flanks of the thread (20).

## Revendications

1. Vis à bois en métal pour construction en bois, comprenant une tête de vis (16) dotée d'une formation d'entraînement (46), une tige de vis (12) dotée d'une pointe de vis (14), la tige de vis (12) étant munie d'une partie non filetée (38) du côté adjacent à la tête de vis (16) et d'un filetage (20) du côté adjacent à la pointe de vis (14), la tige de vis (12) étant réalisée pour former un contre-filetage dans un élément de construction en bois sans perçage d'un avant-trou, une partie d'élargissement (32) étant prévue entre la partie (38), munie du filetage (20), de la tige de vis (12) et la partie non filetée (38) de la tige de vis (12), la partie d'élargissement (32) présentant plusieurs nervures (36) qui font saillie dans la direction radiale au-delà du diamètre extérieur de la partie non filetée (38), les nervures (36) étant réalisées de manière arrondie dans leur zone située radialement à l'extérieur, **caractérisée en ce qu'**un rayon de courbure des nervures (36) est supérieur à une hauteur des nervures (36) mesurée dans la direction radiale.

2. Vis à bois selon la revendication 1, **caractérisée en ce que** les nervures (36) sont réalisées de manière ondulée en section transversale.

3. Vis à bois selon la revendication 1 ou 2, **caractérisée en ce qu'**un rayon de courbure des nervures (36) est approximativement constant.

4. Vis à bois selon au moins l'une des revendications précédentes, **caractérisée en ce que** les nervures (36) sont réparties régulièrement sur la circonférence de la tige de vis (12).

5. Vis à bois selon au moins l'une des revendications 1 à 3, **caractérisée en ce que** les nervures (56) sont réparties irrégulièrement sur la circonférence de la tige de vis.

6. Vis à bois selon au moins l'une des revendications précédentes, **caractérisée en ce qu'**entre 6 et 12 nervures (36) sont prévues.

7. Vis à bois selon au moins l'une des revendications précédentes, **caractérisée en ce que** les nervures (36) sont disposées en parallèle à l'axe longitudinal central (30) de la vis à bois (10).

8. Vis à bois selon au moins l'une des revendications précédentes, **caractérisée en ce qu'**une longueur de la partie d'élargissement (32), mesurée dans le sens de l'axe longitudinal central (20), se situe entre 1,5 fois et 4 fois le pas de vis du filetage (20).

9. Vis à bois selon au moins l'une des revendications précédentes, **caractérisée en ce que** dans la partie (38) munie du filetage (20) de la tige de vis (12), un diamètre de corps (d2) de la tige de vis (12) est égal à au moins 70 % du diamètre extérieur (d1).

10. Vis à bois selon au moins l'une des revendications précédentes, **caractérisée en ce que** dans la partie d'élargissement (32), les nervures (36) sont biseautées à leur extrémité tournée vers la pointe de vis (14).

11. Vis à bois selon au moins l'une des revendications précédentes, **caractérisée en ce que** dans la partie d'élargissement (32), les nervures (36) sont biseautées à leur extrémité tournée vers la tête de vis (16).

12. Vis à bois selon au moins l'une des revendications précédentes, **caractérisée en ce que** de manière directement adjacente à la pointe de vis (14) est prévue une partie de compression de corps (18) dotée d'un filetage (20) et de nervures de compression (28) disposées en parallèle à l'axe longitudinal central de la tige de vis (12).

13. Vis à bois selon la revendication 12, **caractérisée en ce que** les nervures de compression (28) s'étendent au-delà du diamètre de corps du filetage (20) mais présentent une extension radiale inférieure à celle des flancs de filets du filetage (20).
